# FASCICULE DE BREVET EUROPEEN

(11) **EP 0 527 071 B1**
(45) Date de publication et mention de la délivrance du brevet: **13.03.1996**
(21) Numéro de dépôt: 92401950.8
(22) Date de dépôt: 07.07.1992
(51) Int. Cl.: F21V 7/22, B29D 11/00

(54) **Réflecteur en matière plastique thermodurcissable, plus particulièrement pour projecteur de véhicle automobile**
Reflektor aus vernetzbarem Kunststoff, insbesondere für Scheinwerfer eines Autos
Reflector in thermosetting plastic material, more particularly for an automobile projector

(30) Priorité: 10.07.1991 FR 9108696
(43) Date de publication de la demande: 10.02.1993
(73) Titulaire: VALEO VISION, F-93012 Bobigny Cédex (FR)
(72) Inventeur: Benkhoucha, Karim, F-75018 Paris (FR); Chitarra, Salvatore, F-92160 Antony (FR)
(74) Mandataire: Lemaire, Marc

(56) Documents cités:
- EP-A- 0 184 554
- GB-A- 1 461 267
- SECTION CH ,SEMAINE 8939 DERWENT PUBLICATIONS LTD.,LONDON G.B. NO.89-280927(89) JP-A-1203458(MITSUBISHI RAYON KK) 16-08-1989

## Description

La présente invention a pour objet un réflecteur en matière plastique thermodurcissable, plus particulièrement pour un projecteur de véhicule automobile.

Un projecteur automobile comprend essentiellement une lampe placée au centre du foyer d'un réflecteur concave pour former un faisceau lumineux particulier satisfaisant à des normes de sécurité.

Le réflecteur doit présenter une surface réfléchissante de qualité particulièrement élevée afin d'assurer une répartition contrôlée de la lumière réfléchie, exempte de défauts et d'irrégularités qui seraient susceptibles d'engendrer des réflexions parasites génératrices d'éblouissement.

A la fois par souci d'économie et pour permettre l'obtention de formes de plus en plus compliquées, on a réalisé de tels réflecteurs en matière plastique.

Les matières thermoplastiques permettent un moulage aisé, facilement contrôlable, et donnent en général satisfaction pour l'obtention d'un état de surface compatible avec la fonction optique requise.

Mais ces matières thermoplastiques présentent l'inconvénient d'être sensibles à l'échauffement provoqué par la lampe, lorsque le projecteur est allumé.

Cet inconvénient se traduit par l'apparition de déformations locales affectant la qualité du faisceau lumineux réfléchi, de manière d'autant plus sensible que le volume du réflecteur est faible.

On a déjà proposé, notamment dans le document GB-A-1 461 267, de réaliser un réflecteur de projecteur en matière plastique thermodurcissable.

Les matières plastiques thermodurcissables résistent mieux à l'échauffement. Les compositions utilisées comprennent essentiellement une résine à base de polyester insaturé, un agent compensateur de retrait, tel qu'un composé thermoplastique, des fibres de verre formant charges de renforcement.

L'expérience a permis de déterminer les proportions appropriées des différents constituants de manière à obtenir, au moulage par injection, un état de surface exempt d'aspérité ou de crevasse, dit de qualité optique, nécessaire pour les réflecteurs de projecteurs automobiles.

On a pu constater que tout écart, même relativement faible, par rapport à ces proportions appropriées, entraîne une dégradation des propriétés du matériau constituant un réflecteur, en ce qui concerne l'état de surface et/ou la résistance mécanique et la stabilité chimique et mécanique.

Cependant, même en utilisant ces proportions appropriées, on a pu remarquer que le moulage de réflecteurs de petites dimensions ne permettait pas d'obtenir des résultats satisfaisants.

En particulier, les réflecteurs de petites dimensions présentent, en certains endroits, des formes angulaires très marquées. En ces endroits, on a pu constater des défauts de moulage tels qu'une hétérogénéité de répartition des charges fibreuses engendrant des défauts de résistance mécanique sous l'effet de chocs mécaniques et/ou thermiques.

La présente invention a pour objet un réflecteur, plus particulièrement pour projecteur de véhicule automobile, en matière plastique thermodurcissable, qui ne présente pas les inconvénients ci-dessus.

Un réflecteur, plus particulièrement pour projecteur de véhicule automobile, en matière plastique thermodurcissable comportant des charges de renforcement selon l'invention, est caractérisé en ce que lesdites charges de renforcement se trouvent, dans une proportion pondérale de 10 à 25 % par rapport à la masse totale de ladite matière, et en ce que lesdites charges de renforcement comprennent de 50 % à 95 % en poids de charges fibreuses telles que, plus particulièrement, des fibres de verre, et de 5 à 50 % en poids de wollastonite.

De préférence, lesdites charges de renforcement comprennent de 60 à 70 % de fibres de verre et de 30 à 40 % de wollastonite.

Des résultats particulièrement satisfaisants ont été obtenus, selon l'invention, en utilisant une wollastonite présentant une granulométrie voisine de 10 microns, ayant subi un ensimage au moyen d'un composé de silane.

On rappelle que la wollastonite est un métasilicate de calcium de forme aciculaire.

La matière thermodurcissable utilisée comprend, en conséquence :
- une résine de polyester insaturée ;
- un monomère tel que du styrène ;
- un agent anti-retrait, avantageusement formé d'un mélange d'un produit thermoplastique tel que, de préférence, de l'adipate de polypropylène et d'un élastomère, de préférence du type SEBS, c'est-à-dire présentant la séquence Styrène-Ethylène-Butadiène-Styrène ;
- des charges pulvérulentes, telles que du carbonate de calcium ;
- un mélange de charges fibreuses, plus particulièrement des fibres de verre, et de wollastonite, dans les proportions indiquées ci-dessus ;
- différents agents, notamment catalyseur et démoulant.

Des essais réalisés par la demanderesse ont permis de mettre en évidence que, dans les proportions relatives ci-dessus, le remplacement d'une partie des charges fibreuses par de la wollastonite permet, par un effet de synergie inattendu, d'obtenir de nettes améliorations en ce qui concerne le module de flexion ainsi qu'en matière de résistance à la rupture.

Les réflecteurs de projecteurs, y compris ceux de petites dimensions, réalisés selon l'invention, présentent en outre une meilleure qualité d'état de surface, en particulier dans les zones optiquement actives.

On a pu remarquer, en outre, que la présence de wollastonite, dans les proportions de l'invention, permet, lors du moulage par injection, d'assurer une répartition homogène des charges fibreuses même dans des zones fortement angulaires, favorisant l'obtention de caractéristiques de résistance mécanique et thermique homogènes.

D'autres caractéristiques et avantages de l'invention apparaîtront dans la description ci-après d'exemples de mise en oeuvre de l'invention et d'exemples comparatifs.

On réalise un mélange n° 1 ayant la composition pondérale suivante, exprimée en pourcentages :
a) 20 % d'une résine de polyester insaturé de type maléique commercialisée sous la référence "MO 003" par la société CRAY VALLEY, et de styrène.
b) 10 % d'un agent anti-retrait comprenant un composé thermoplastique tel qu'un polyester saturé, ainsi qu'un élastomère du type styrène-éthylène-butadiène-styrène (SEBS).
c) 55 % d'une charge pulvérulente constituée par du carbonate de calcium, et d'agents tels que catalyseur et démoulant.
d) 15 % de charges de renforcement constituées de fibres de verre présentant une longueur moyenne de 4,5 mm et un diamètre moyen de 10 microns.

Le mélange n° 2 est réalisé avec les mêmes constituants a, b, c, dans les mêmes proportions que pour le mélange n° 1 ci-dessus.

Les charges de renforcement comportent, exprimées en pourcentages par rapport au poids total du mélange :
- 11,3 % de fibres de verre de même nature que celles du mélange n° 1 ;
- 3,7 % de wollastonite présentant une granulométrie moyenne de 10 microns et ayant subi un traitement d'ensimage au moyen d'un composé du type silane, commercialisée sous la référence "10 UP" par la société WICROLL.

On notera que dans ce mélange les proportions pondérales relatives de fibres de verre et de wollastonite sont respectivement de 75 % et 25 %.

Dans un mélange n° 3, seules les proportions relatives de fibres de verre et de wollastonite sont modifiées par rapport à l'exemple n° 2, de manière que ces proportions relatives atteignent 50 % et 50 %.

De la sorte, les proportions pondérales exprimées par rapport au mélange sont :
- 7,5 % pour les fibres de verre et,
- 7,5 % pour la wollastonite.

Un mélange n° 4 est réalisé également comme pour le mélange n° 2, mais les proportions relatives de fibres de verre et de wollastonite sont respectivement de 25 % et 75 %, ce qui correspond à des pourcentages pondéraux de
- 3,7 % pour les fibres de verre et,
- 11,3 % pour la wollastonite, exprimés par rapport au mélange.

Un mélange n° 5 est identique au mélange n° 1, sauf que les fibres de verre sont intégralement remplacées par de la wollastonite, telle que définie dans l'exemple n° 2, avec un pourcentage pondéral égal, donc, à 15 % du total du mélange.

Plusieurs réflecteurs de projecteurs de véhicules automobiles, de petites dimensions, et présentant des formes anguleuses prononcées, sont ensuite réalisés par moulage par injection successivement avec un même moule, à partir des mélanges 1 à 5 ci-dessus.

On a pu remarquer que la facilité de moulage augmente du mélange 1 au mélange 5, ce qui se traduit par un augmentation de la longueur d'écoulement dans le moule à conditions de pression et de température identiques.

Au démoulage, de bons résultats sont obtenus avec les mélanges 1 à 4. On a observé, à plusieurs reprises, des phénomènes de casse lors de l'éjection hors du moule avec le mélange n° 5.

Les réflecteurs obtenus à partir des mélanges 1, 2 et 3 présentent une forme optique et un état de surface correct à partir du mélange n° 1, et excellent à partir des mélanges 2 et 3.

Les résultats obtenus à cet égard à partir des mélanges 4 et 5 sont respectivement médiocre et critique.

En ce qui concerne les caractéristiques mécaniques des réflecteurs obtenus, on observe, avec les mélanges 2 et 3, et dans une moindre mesure avec le mélange 4, une amélioration imprévue et sensible en ce qui concerne le module de flexion et la résistance aux contraintes de rupture.

On en conclut qu'un phénomène de synergie apparait, particulièrement net avec les mélanges 2 et 3, entre les charges fibreuses et la wollastonite.

On pense que ceci est dû à un effet isotropique de la wollastonite, dont on aura pu remarquer que la granulométrie est choisie identique à l'épaisseur des fibres de verre, non seulement en soi du fait que la wollastonite se présente naturellement sous forme aciculaire, mais aussi permet au moulage, une répartition plus homogène des charges fibreuses entraînant un produit moulé de meilleure qualité et plus résistant.

D'autres séries d'essais et de tests ont été réalisés sur des réflecteurs réalisés à partir de mélanges 1A à 5A et 1B à 5B qui dérivent respectivement des mélanges 1 à 5 en modifiant le taux de charges de renforcement de manière à ce qu'il soit égal à :
- 10 % pour les mélanges 1A à 5A et de
- 25 % pour les mélanges 1B à 5B, les proportions de charges pulvérulentes étant modifiées en conséquence.

Les proportions relatives de charges fibreuses et de wollastonite sont les mêmes respectivement que dans les exemples 1 à 5.

Les mêmes constations relatives effectuées pour les réflecteurs obtenus à partir des exemples 1 à 5 ont pu être faites également pour des réflecteurs réalisés à partir des mélanges 1A à 5A, d'une part, et 1B à 5B, d'autre part.

Le meilleur compromis global paraît toutefois être obtenu avec les mélanges 1 à 5.

Des essais complémentaires ont été réalisés, qui ont montré que le maximum d'amélioration était obtenu avec des mélanges semblables aux mélanges ci-dessus, avec une même quantité totale de charges de renforcement, dans lesquels la proportion relative de charges fibreuses et de wollastonite sont respectivement comprises entre 60 et 70 % et entre 30 et 40 %.

La demanderesse a en outre découvert que, pour les mélanges 2 et 3, ainsi que pour les mélanges intermédiaires correspondant aux essais complémentaires évoqués ci-dessus, un meilleur état de surface était obtenu en augmentant légèrement la proportion d'agent anti-retrait jusqu'à une proportion comprise entre 10,5 et 13 % du poids du mélange, sans altérer pour autant les qualités de résistances thermique et mécanique.

## Revendications

1. Réflecteur, plus particulièrement pour projecteur de véhicule automobile, en matière plastique thermodurcissable comportant des charges de renforcement, caractérisé en ce que lesdites charges de renforcement se trouvent dans une proportion pondérale de 10 à 25 % par rapport à la masse totale de ladite matière, et en ce que lesdites charges de renforcement comprennent de 50 % à 95 % en poids de charges fibreuses telles que, plus particulièrement, des fibres de verre, et de 5 à 50 % en poids de wollastonite.

2. Réflecteur, selon la revendication 1, caractérisé en ce que lesdites charges de renforcement comprennent de 60 à 70 % de fibres de verre et de 30 à 40 % de wollastonite.

3. Réflecteur, selon l'une quelconque des revendications 1 ou 2, caractérisé en ce que ladite wollastonite présente une granulométrie voisine de 10 microns et en ce qu'elle a subi un ensimage au moyen d'un composé de silane.

4. Réflecteur, selon l'une quelconque des revendications précédentes, caractérisé en ce que lesdites fibres de verre présentent une longueur moyenne de 4,5 mm et un diamètre moyen de 10 microns.

5. Réflecteur, selon l'une quelconque des revendications précédentes, caractérisé en ce qu'il est réalisé par le moulage par injection d'une composition comprenant :
- une résine de polyester insaturé de type maléique ;
- un monomère tel que du styrène ;
- un agent anti-retrait comprenant un composé thermoplastique tel qu'un polyester saturé, ainsi qu'un élastomère du type styrène-éthylène-butadiène-styrène ;
- des charges de renforcement constituées de fibres de verre et de métasilicate de calcium ;
- des charges pulvérulentes ;
- un catalyseur ;
- un agent démoulant.

6. Réflecteur, selon la revendication 5, caractérisé en ce que la proportion pondérale d'agent anti-retrait est comprise entre 10,5 et 13 % du poids total de ladite composition.

## Patentansprüche

1. Reflektor, insbesondere für Kraftfahrzeugscheinwerfer, aus vernetzbarem Kunftstoff mit Verstärkungsfüllstoffen , **dadurch gekennzeichnet,** daß die besagten Verstärkungsfüllstoffe in einem Gewichtsanteil von 10 bis 25%, bezogen auf die Gesamtmasse des besagten Kunststoffes, vorhanden sind und daß die besagten Verstärkungsfüllstoffe 50 bis 95 Gewichtsprozent Faserfüllstoffe, wie insbesondere Glasfasern, sowie 5 bis 50 Gewichtsprozent Wollastonit enthalten.

2. Reflektor nach Anspruch 1 , **dadurch gekennzeichnet,** daß die besagten Verstärkungsfüllstoffe 60 bis 70 % Glasfasern und 30 bis 40 % Wollastonit enthalten.

3. Reflektor nach einem der Ansprüche 1 oder 2 , **dadurch gekennzeichnet,** daß der besagte Wollastonit eine Korngröße von etwa 10 Mikron aufweist und daß er einem Schlichtvorgang mittels einer Silanverbindung unterzogen wurde.

4. Reflektor nach einem der vorangehenden Ansprüche, **dadurch gekennzeichnet,** daß die besagten Glasfasern eine durchschnittliche Länge von 4,5 mm und einen mittleren Durchmesser von 10 Mikron aufweisen.

5. Reflektor nach einem-der vorangehenden Ansprüche, **dadurch gekennzeichnet,** daß er durch Spritzgießen einer Mischung hergestellt wird, die sich zusammensetzt aus:
- einem ungesättigten Polyesterharz vom Typ Maleinharz;
- einem Monomer wie etwa Styrol;
- einem Schwindungshemmer, der aus einer Mischung aus einer thermoplastischen Substanz, wie etwa einem gesättigen Polyester, sowie aus einem Elastomer des Typs Styrol-Ethylen-Butadien-Styrol, besteht;
- Verstärkungsfüllstoffen, die aus Glasfasern und Kalziummetasilikat bestehen;
- pulverförmigen Füllstoffen;
- einem Katalysator;
- einem Trennmittel.

6. Reflektor nach Anspruch 5 , **dadurch gekennzeichnet,** daß der Gewichtsanteil des Schwindungshemmers zwischen 10,5 und 13 % des Gesamtgewichts der besagten Mischung liegt.

## Claims

1. A reflector, more particularly for a motor vehicle headlamp, of thermosetting plastics material including reinforcing material, characterised in that the said reinforcing material is present in a proportion by weight of 10% to 25% with respect to the total mass of the said material, and in that the said reinforcing material comprises from 50% to 95% by weight of fibrous material, such as, most particularly, glass fibres, and from 5% to 50% by weight of wollastonite.

2. A reflector according to Claim 1, characterised in that the said reinforcing material comprises from 60% to 70% of glass fibres and from 30% to 40% of wollastonite.

3. A reflector according to Claim 1 or Claim 2, characterised in that the said wollastonite has a particle size close to 10 microns, and in that it has been subjected to sealing treatment by means of a silane composition.

4. A reflector according to any one of the preceding Claims, characterised in that the said glass fibres have a mean length of 4.5 mm and a mean diameter of 10 microns.

5. A reflector according to any one of the preceding Claims, characterised in that it is made by injection moulding of a composition comprising:
- an unsaturated polyester resin of the maleic type;
- a monomer such as a styrene;
- an agent for the prevention of shrinkage, comprising a thermoplastic compound such as a saturated polyester together with an elastomer of the styrene-ethylene-butadiene-styrene type;
- reinforcing materials comprising glass fibres and calcium metasilicate fibres;
- powder fillers;
- a catalyst; and
- a stripping agent.

6. A reflector according to Claim 5, characterised in that the proportion by weight of the said agent for preventing shrinkage lies in the range between 10.5% and 13% of the total weight of the said composition.
